# EUROPEAN PATENT APPLICATION

(11) **EP 1 783 529 A1**
(43) Date of publication of application: **09.05.2007**
(21) Application number: 06122543.9
(22) Date of filing: 18.10.2006
(51) Int. Cl.: G02B 23/12

(54) **Modular night vision assembly**

(30) Priority: 04.11.2005 US 267466
(71) Applicant: ITT MANUFACTURING ENTERPRISES, INC., Wilmington, Delaware 19801 (US)
(72) Inventor: Smith, William Allen, Daleville, VA 24019 (US); Oesterreich, Mark Edwin, Roanoke, VA 24019 (US); Willey, Charels D., Roanoke, VA 24015 (US)
(74) Representative: Esser, Wolfgang

(57) **Abstract**

A modular night vision assembly comprising a first night vision monocular (100), a power assembly (110) and a connection assembly. The monocular includes a first monocular housing (12) enclosing a first optic assembly and a first associated electrical assembly. A first contact interface (60) is defined along the exterior of the first monocular housing and is in electrical communication with the first electrical assembly. The first contact interface and the first monocular housing are sealed such that the first monocular assembly is independently sealed. The power assembly includes a power housing (112) enclosing an electrical power source (120) and a second contact interface in communication with the electrical power source. The connection assembly is configured to removably connect the power assembly to the first monocular assembly with the first and second contact interfaces electrically interconnected and sealingly enclosed between the power housing and the first monocular housing.

## Description

### BACKGROUND OF THE INVENTION

The present invention relates to night vision devices that enable a viewer to observe objects at night or during other lowlight conditions. More particularly, the present invention relates to a multifunctional monocular or binocular night vision device that can be used in various night vision assemblies.

Night vision devices are widely used in the military to provide soldiers, aviators and sailors with the ability to view objects at night or during other low light conditions, However, night vision devices traditionally have been designed to accommodate only one specific application within the military. For example, soldiers in the army are issued night vision goggles that mount to their helmets to enable the soldiers to see at night. One such night vision goggle system is a binocular viewing system that mounts to a soldier's head or helmet. Although, such night vision goggle systems are good for allowing a soldier to see in the dark, that same night vision goggle system prevents the soldier from looking through the sight of his/her gun. As a result, the same soldiers that were issued night vision goggles may also require a second night vision system for their weapon. As such, during combat the soldier must remove the night vision goggles and view a target through the night vision sight attached to the soldier's gun.

With such night vision devices, soldiers operating at night may be required to carry and operate multiple night vision systems. This adds weight and bulk to the soldiers and requires the soldier to be trained in how to properly operate and use more than one night vision system.

While there has been an attempt to produce modular systems in which a monocular may be utilized in various applications, such systems have had drawbacks.

For example, some modular systems simply incorporated mounting brackets or the like to a handheld monocular device to allow the device to be connected to weapons, helmets or like. The monocular devices typically included all of the standard power and adjustment components. This made such devices cumbersome. Furthermore, the adjustment components on the monocular device reduced the ability to adjust the monocular in conjunction with the device to which it was connected. Additionally, the combined assembly of the monocular device and the secondary device often result in a combined assembly lacking sufficient robustness and field usability.

### SUMMARY OF THE INVENTION

The present invention provides a modular night vision assembly comprising at least a first night vision monocular, a power assembly each having at least one electrical contact interface and a connection assembly that according to claim 1 is configured to removably connect the power assembly to the first monocular with the first and second contact interfaces electrically interconnected and sealingly enclosed between the power assembly housing and the first monocular housing. The monocular includes a first monocular housing enclosing a first optic assembly and a first associated electrical assembly. A first contact interface is defined along the exterior of the first monocular housing and is in electrical communication with the first electrical assembly. The first contact interface and the first monocular housing are sealed such that the first monocular assembly is independently sealed. The power assembly includes a power housing enclosing an electrical power source and a second contact interface in communication with the electrical power source. The connection assembly is configured to removably connect the power assembly to the first monocular assembly with the first and second contact interfaces electrically interconnected and sealingly enclosed between the power housing and the first monocular housing.

In an alternate embodiment of the present invention, the modular night vision device further comprises a second night vision monocular assembly similar to the first night vision monocular and including a third contact interface. The power assembly includes a fourth contact interface in communication with the electrical power source, The connection assembly is further configured to removably connect the power assembly to the second monocular assembly with the third and fourth contact interfaces electrically interconnected and sealingly enclosed between the power housing and the second monocular housing.

### BRIEF DESCRIPTION OF THE DRAWINGS

The invention is best understood from the following detailed description when read in connection with the accompanying drawing. It is emphasized that, according to common practice, the various features of the drawing may not be to scale. On the contrary, the dimensions of the various features maybe arbitrarily expanded or reduced for clarity. Included in the drawing are the following figures:
- Fig. 1: is an oblique view of a monocular in accordance with a first embodiment of the present invention.
- Fig. 2: is a top plan view of the monocular of Fig. 1.
- Fig. 3: is an end plan view of the monocular of Fig. 1.
- Fig. 4: is a cross-sectional view along the line 4-4 in Fig. 1.
- Fig. 5: is a cross-sectional view along the line 5-5 in Fig. 1.
- Fig. 6: is an isometric view of a monocular assembly incorporating the monocular of Fig. 1.
- Fig. 7: is a cross-sectional view of the power assembly utilized in the monocular assembly of Fig. 6.
- Fig. 8: is a cross-sectional view along the line 8-8 in Fig. 6.
- Fig. 9: is an isometric view of a binocular assembly incorporating a pair of the monocular of Fig. 1.
- Fig. 10: is a cross-sectional view along the line 10-10 in Fig. 9.
- Fig. 11: is a cross-sectional view along the line 11-11 in Fig. 9.
- Fig. 12: is an isometric view of a portion of a power assembly of an alternate embodiment of the present invention.

### DETAILED DESCRIPTION OF THE INVENTION

While preferred embodiments of the invention have been shown and described herein, it will be understood that such embodiments are provided by way of example only. Numerous variations, changes and substitutions will occur to those skilled in the art without departing from the spirit of the invention. Accordingly, it is intended that the appended claims cover all such variations as fall within the spirit and scope of the invention.

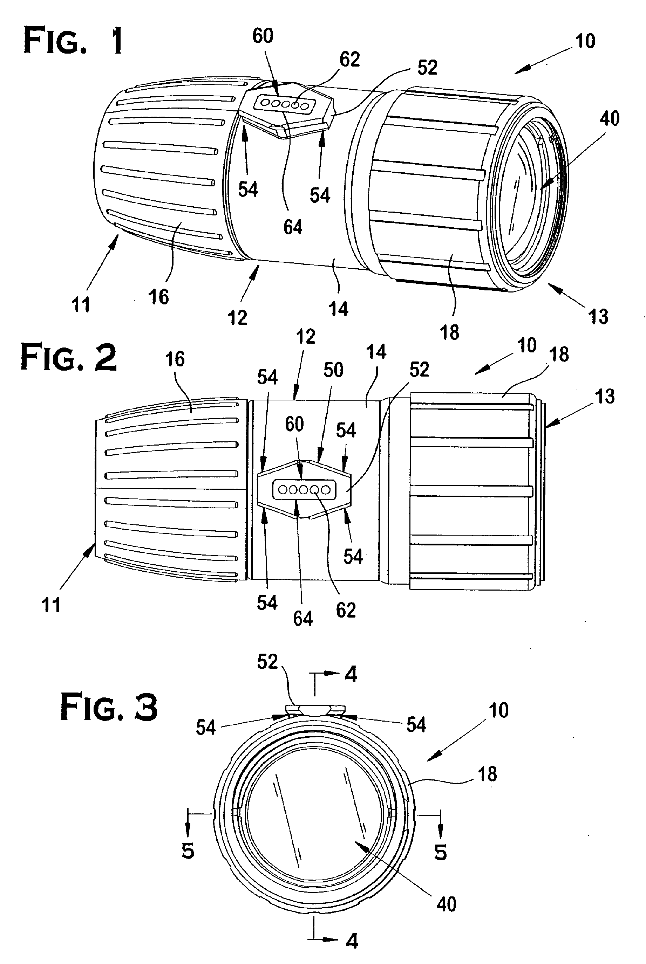

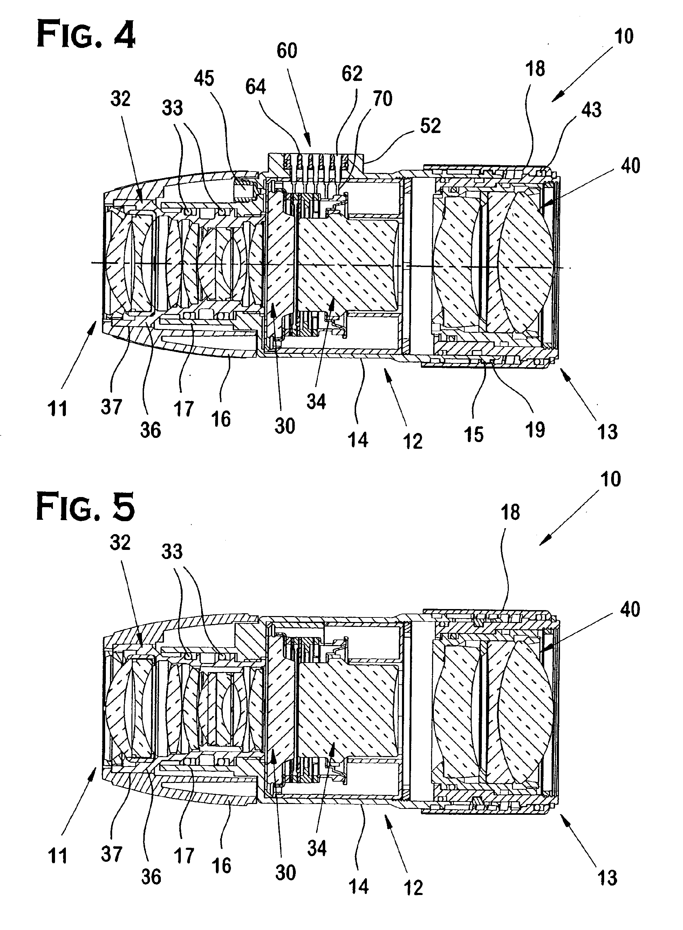

Referring to Figs. 1-5, a night vision monocular 10 in accordance with a first embodiment of the present invention is shown. The night vision monocular 10 generally comprises a housing 12 with an image intensifier 30 and user output optics 40 positioned therein. The housing 12 is preferably sized to easily fit within one hand. The housing 12 generally comprises a tube body 14 with an objective lens knob 16 at a forward end 11 and an eyepiece diopter focus knob 18 at a rear end 13. While the housing 12 components are illustrated as being cylindrical, the tube body 14, objective lens knob 16, and focus knob 18 may have other configurations. The tube body 14, objective lens knob 16, and focus knob 18 are preferably manufactured from molded plastic, metal or composite materials, but may be manufactured utilizing other processes and other materials.

The objective lens knob 16 sealingly houses an objective lens assembly 32 of the image intensifier 30. The objective lens knob 16 is positioned about a front portion 17 of the tube body 14. The objective lens assembly 32 includes a frame 36 that supports the optics in a desired configuration. The optics contained within the objective lens assembly 32 are known in the art, being the same or similar to those found in the objective of the military AN/AVS-6 night vision system. The frame 36 is sealingly secured to the objective lens knob 16 as indicated at 37, The frame 36 is positioned in and supported by the front portion 17 of the tube body 14. One or more sealing gaskets 33 or the like are positioned between the frame 36 and the inner surface of the front portion 17 of the tube body 14, thereby providing a generally water impervious seal at the front end 13 of the housing 12. Additional seals may also or alternatively be provided between the objective lens knob 16 and the outside surface of the front portion 17 of the tube body 14. The objective lens knob 16 is axially adjustable relative to the tube body 14 such that the position of the objective lens assembly 32 is adjusted with respect to the input of the image intensifier 30. A sealable purge port 45 is provided within the objective lens knob 16. The purge port 45 facilitates purging of the assembled monocular 10.

The focus knob 18 sealingly houses the user output optics 40. The optics 40 are known in the art and are the same or similar to the eyepiece optics of the AN/AVS-6 night vision system. The focus knob 18 has internal threads 19 configured to engage external threads 15 on the tube body 14 Rotation of the focus knob 18 causes axial movement of the user output optics 40 relative to the tube body 14, thereby providing diopter focus. One or more sealing gaskets 43 or the like are compressed between the focus knob 18 and the tube body 14, thereby providing a generally water impervious seal at the rear end 11 of the housing 12.

The monocular 10 includes the objective lens assembly 32 which is configured to focus visible and near infrared light from a sensed image onto an image intensifier tube 34. The image intensifier tube 34 may be a known 12 tube which generally includes a photo-cathode that converts the light photons to electrons, a multi-channel plate that accelerates the electrons and a phosphor screen that receives the accelerated electrons and creates a luminance in response to the accelerated electrons. The image created by image intensifier tube 34 is directed along an image intensified input path to the user output optics 40. Image intensifier tube 34 is preferably a late model version such as referred to in the art as Generation III or a later model when such becomes available. If desired, an earlier model, such as a Generation II, may be used.

A contact interface 60 is provided along the outside surface of the tube body 14. The contact interface 60 includes a plurality of pins 62 configured for engagement with corresponding pins on a power assembly as will be described hereinafter. The pins 62 are electrically coupled with the image intensifier tube 34, as indicated at 70, to provide power thereto upon connection of the monocular to a power assembly as described below. Since the image intensifier tube 34 is electrically disconnected from the power source, the monocular 10 will not drain the power source when not assembled.

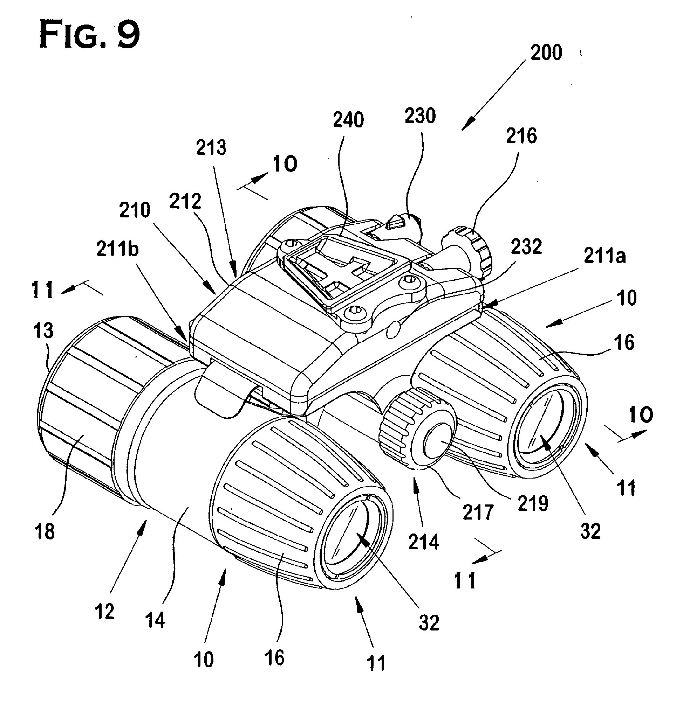

A sealing material, as indicated at 64, is provided about the pins 62 such that the tube body 14 remains generally water impervious at the contact interface 60. Since the monocular tube body 14 is sealed with respect to both the objective lens knob 16 and the focus knob 18 and the contact interface 60 is sealed, the monocular housing 12 manufactured as a sealed, independent unit. The sealed housing 12 can be purged during the manufacturing process. Prior art modular assemblies generally required the device to be purged after the monocular is attached to another component. The sealed housing 12 also allows the monocular 10 to be transported with a significantly reduced risk of environmental contamination. For example, if a soldier carries two monoculars such that a binocular assembly, similar to that shown in Fig. 9, can be assembled, the unused monocular is generally environmentally safe while the other monocular is used as a standalone monocular, similar to that shown in Fig. 6. In contrast, monoculars utilized in prior art modular systems generally do not provide such environmental sealing and require the soldier to take extra steps, for example, protective packing, to protect the unused monocular.

In the present embodiment, the contact interface 60 is provided within a connection platform 52 which forms a portion of the connection assembly 50, as will be described hereinafter. However, the contact interface 60 does not have to be associated with the connection assembly 50, but instead may be positioned independent thereof.

As noted above, the monocular 10 of the present embodiment includes connection platform 52 which forms a portion of the connection assembly 50. The connection platform 52 extends outwardly from the outer surface of the tube body 14 and includes one or more undercut regions 54 configured to provide a snapfit connection with various power assemblies. The other portion of the connection assembly 50 is provided in the respective power assemblies. Two illustrative power assemblies will be described with reference to Figs. 611. Figs. 68 illustrate a monocular assembly 100 utilizing one monocular 10 and a standalone monocular power assembly 110. The monocular assembly 200 illustrated in Figs. 911 utilizes two monoculars 10 and a binocular power assembly 210, These examples illustrate only two of the applications in which the monocular 10. may be used. The monocular 10 may also be used in other applications, for example, but not limited to, aviation binoculars, a pocket scope, a survival vest scope, and a weapon site.

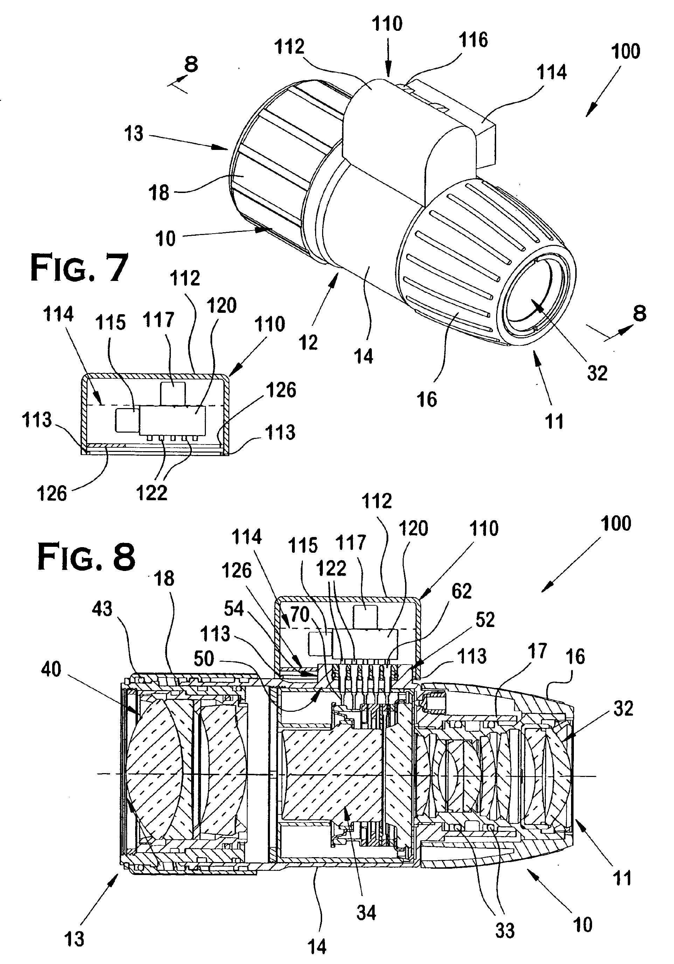

For ease of understanding, the illustrated power assemblies 110, 210 will be described separately. Referring to Figs. 6-8, the power assembly 110 is utilized with a monocular 10 to form the monocular assembly 100 which functions as a standalone monocular. The power assembly 110 includes a housing 112 configured for connection to the monocular 10. The housing 112 includes an internal structure configured to provide a snapfit engagement with the connection platform 52 of the monocular 10, In the present embodiment, spring clips 126 extend inwardly within the housing 112. The spring clips 126 are configured such that the spring clips 126 contact the corners of the platform 52. To connect the power assembly 110 to the monocular 10, a downward force is applied to the power assembly 110 such that the spring clips 126 snap past the corners of the platform 52 and are retained in the undercut regions 54 of the platform 52, as shown in Fig. 8. Upon connection, a gasket seal 113 along the lower perimeter of the housing 112 is pressed into sealing engagement with the monocular housing 12, The power assembly housing 112 and monocular housing 12 thereby sealingly enclose the electrical interconnection between the power assembly 110 and the monocular 10.

To remove the power assembly 110 from the monocular 10, an opposite force is applied to unsnap the spring clips 126 from the undercut regions 54. As such, the monocular 10 can be easily connected to and removed from the power assembly 110 in the field without the need for special tools. While spring clips 126 are utilized in the present embodiment, other engagement mechanisms, as shown and described below with respect to Figs. 911, may also be utilized. Furthermore, while the connection assembly 50 of the present embodiment provides a snap-fit between an undercut platform and an engagement mechanism, the invention is not limited to such. For example, the connection assembly 50 may include, but is not limited to, various sliding engagements, threaded engagements, clips, straps, brackets and the like.

The housing 112 includes a portion 114 configured to receive and house a power source, for example, a battery (not shown). In the present embodiment, the housing portion 114 is configured to receive a battery having a size of one-half 'AA". The housing 112 can be configured to receive other battery types and sizes and may be configured to receive more than one battery or other power source. Referring to Figs. 7 and 8, the power source is electrically coupled to internal circuitry 115 that is in turn electrically coupled to a control circuit board 120.

The housing 112 also supports an on/off power switch 116. Similar to the power source, the switch 116 is electrically coupled to internal circuitry 117 that is in turn electrically coupled to the control circuit board 120. The circuit board 120 is electrically coupled to a series of electrical contacts 122 that are configured to align with the pins 62 of the monocular contact interface 60. When the power assembly 110 is snap-fit onto the monocular 10, the pins 122 engage the monocular pins 62. The engagement of the spring clips 126 with the undercut portions 54 maintains the pins 122 in electrical contact with the monocular pins 62. The switch 116 is utilized to control the flow of electricity from the power source to the contacts 122, thereby allowing the monocular assembly 100 to be turned off when not in use.

While the power assembly 110 is shown in its simplest form, it may be provided with additional features. For example, the power assembly 110 may be provided with a light sensor (not shown). As is well known with night vision devices, a light sensor is used to detect levels of ambient light that may damage the night vision device, wherein a circuit is provided to disable the night vision device should such a level of ambient light be detected. The light sensor can be associated with and controlled by the circuitry of the power assembly 110. The power assembly 110 may also be provided with an infrared illumination source (not shown). The use of an illumination source is also a well known feature of many night vision devices. The infrared illumination source emits infrared light that is detectable by the night vision monocular 10 and is used in instances of near total darkness. The infrared illumination source can be connected to and controlled by the circuitry of the power assembly 110. Optionally, additional features can be included within the circuitry of the power assembly 110. Those optional features may include a low battery detection circuit, a run time meter, variable gain, a security code enablement feature and the like. All such optical features may be selected from a menu, wherein the features are enabled by the various combinations of switch actuations,

Referring to Figs. 9-11, the power assembly 210 is utilized with two monoculars 10 to form the monocular assembly 200 which functions as a binocular. The power assembly 210 includes a housing 112 including a central bridge portion 213 extending between two connection portions 211a and 211 b. Each connection portion 211a, 211 b is configured for connection to a respective monocular 10. Each connection portion 211a, 211 b includes an internal structure configured to provide a engage the connection platform 52 of the respective monocular 10. In the present embodiment, the connection assembly is similar to the previous embodiment and includes spring clips 225 within each connection portion 211 a, 211 b configured for snap-fit engagement with a respective monocular connection platform 52. Upon connection, a gasket seal 213 along the lower perimeter of each connection portion 211 a, 221 b is pressed into sealing engagement with the respective monocular housing 12. The power assembly housing 212 and monocular housings 12 thereby sealingly enclose the electrical interconnections between the power assembly 210 and the monocutars 10.

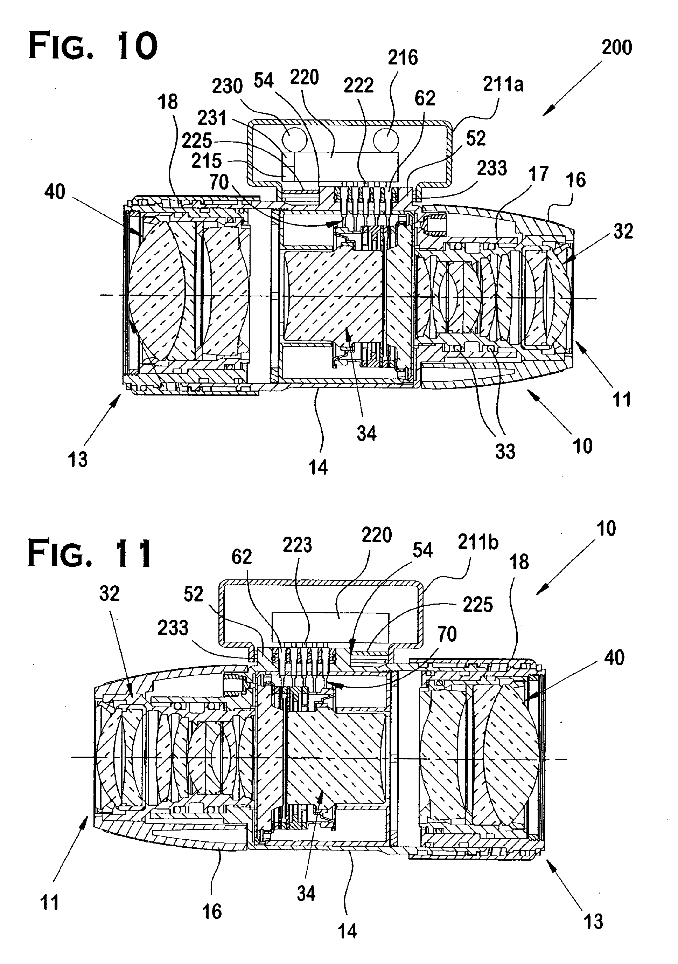

The housing 212 includes a portion 214 configured to receive and house a power source, for example, a battery (not shown). In the present embodiment, the housing portion 214 is configured to receive one battery having a size of "AA". The housing portion 214 can be configured to receive other battery types and sizes and may be configured to receive more than one battery or other power source. The housing portion 214 includes a removable cap 217. The cap 217 includes a button 219 for attachment of a tether. Referring to Fig. 10, the power source is electrically coupled to internal circuitry 215 that is in turn electrically coupled to a control circuit board 220.

The housing 212 also supports a rotary switch 216. The switch 116 is electrically coupled to internal circuitry of the control circuit board 220. The circuit board 220 is electrically coupled to a series of electrical contacts 222 within the connection portion 211 a. The circuit board 220 is also electrically coupled to a series of electrical contacts 223 within the connection portion 211 b. The contacts 222 and 223 are configured to align with the pins 62 of a respective monocular 10. When the power assembly 210 is connected to monoculars 10, the respective pins 222, 223 engage pins 62 of the respective monocular 10. The engagement of the spring clips 225 with the undercut portions 54 maintains the pins 222, 223 in electrical contact with the monocular pins 62. The switch 216 is utilized to control the flow of electricity from the power source to the contacts 222 and 223, thereby allowing the monocular assembly 200 to be turned off when not in use. The switch 216 may further be configurable to control the variable gain of the monoculars 10. The switch 216 may control the variable gain of both monoculars 10 at one time through the internal 30 circuitry communicating with the monoculars 10 through the contacts 222, 223.

The power assembly 210 also includes an infrared illumination source 232. The infrared illumination source emits infrared light that is detectable by the night vision monoculars 10 and is used in instances of near total darkness. A switch 230 associated with internal circuitry 231 may be utilized to turn the infrared illumination source 232 on and off.

Optionally, additional features can be included within the circuitry of the power assembly 210. Those optional features may include a light sensor, a low battery detection circuit, a run time meter, variable gain, a security code enablement feature and the like. All such optical features may be selected from a menu, wherein the features are enabled by the various combinations of switch actuations.

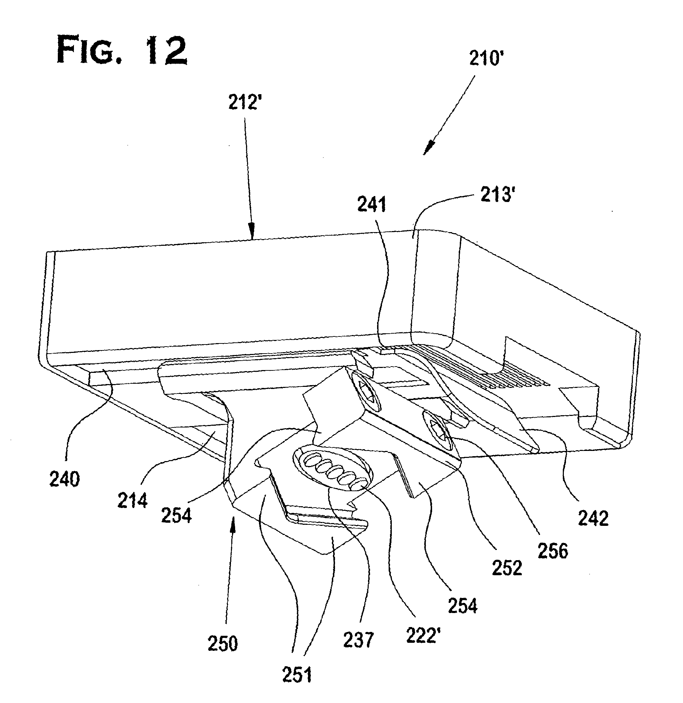

The housing 212 further includes a mounting platform 240. The mounting platform 240 is configured to facilitate connection of the monocular assembly 200 to a helmet or the like. Other mounting assemblies may also be provided in place of or in addition thereto. The housing 212 may have additional features as well. For example, the bridge portion 213 may have a central hinge to facilitate interpupillary adjustments between the monoculars 10, Alternatively, the power assembly 210 may have lateral adjustment means as will be described hereinafter with respect to Fig. 12. Additional features may also be incorporated.

Referring to Fig. 12, a power assembly 210' that is an alternate embodiment of the invention is shown. The power assembly 210' is similar to power assembly 210, but includes lateral adjustment means and a screwed connection assembly. Power assembly 210' includes a power assembly housing 212' including a central bridge portion 213' and a pair of connection portions 250 (only one is shown) connected thereto. The connection portions 250 are separate components that are slideable along tracks 240 formed in the central bridge portion 213'. The tracks 214 may include a series of notches 241 configured to receive a releasable latch mechanism 242. To adjust the interpupillary distance between the monoculars 10, the latch mechanism 242 is disengaged from the notches 241 and the respective connection portion 250 is moved laterally along the tracks 240.

To connect the power assembly 210' to a monocular 10, each connection portion 250 is provided with a pair of fixed wedges 251 opposed by a moveable member 252. The moveable member 252 and the fixed wedges 251 surround the contacts 222. A groove 237 is provided about the contacts 222 and is configured to receive a sealing gasket (not shown) or the like such that upon engagement with the connection platform, the contacts are sealingly enclosed. Moveable member 252 includes a pair of wedges 254 opposed to the fixed wedges 251. Each of the wedges 251, 254 is configured to engage a respective undercut regions 54 of the monocular connection platform 52. Adjustment screws 256 are provided to move the moveable member 252 toward and away from the fixed wedges 251. To attach a monocular 10, the moveable member 252 is moved away from the fixed wedges 251. The connection platform 52 of the respective monocular 10 is positioned within the space between the moveable member 252 and the fixed wedges 251. The screws 256 are tightened such that the wedges 251 and 254 engage the undercut regions 54 of the platform 52. Positioning of the wedges 252 within the undercut regions 54 retains the power assembly 210' to the respective monocular 10. To remove a monocular 10 from the power assembly 210', the respective screws 256 are unscrewed to release the wedges 251 and 254 from the undercut regions 54,

It will be understood that the night vision monocular assemblies described herein are merely exemplary and that a person skilled in the art may make many variations and modifications to the described embodiments utilizing functionally equivalent components to those described. All such variations and modifications are intended to be included within the scope of this invention as defined by the appended claims.

## Claims

1. A modular night vision assembly comprising:
a first night vision monocular (10) including a first monocular housing (12) enclosing a first optic assembly and a first associated electrical assembly (34); and a first contact interface (60) defined along the exterior of the first monocular housing and in electrical communication with the first electrical assembly (34), the first contact interface and the first monocular housing being sealed such that the first monocular is independently sealed;
a power assembly (110) including a power housing (112) enclosing an electrical power source and a second contact interface in communication with the electrical power source; and
a connection assembly configured to removably connect the power assembly to the first monocular with the first and second contact interfaces electrically interconnected and sealingly enclosed between the power assembly housing and the first monocular housing.

2. The modular night vision assembly according to claim 1 further comprising:
a second night vision monocular (11) including a second monocular housing enclosing a second optic assembly and a second associated electrical assembly; and a third contact interface defined along the exterior of the second monocular housing and in electrical communication with the second electrical assembly, the third contact interface and the second monocular housing being sealed such that the second monocular is independently sealed; and
wherein the power assembly (210) includes a fourth contact interface in communication with the electrical power source and the connection assembly is further configured to removably connect the power assembly to the second monocular with the third and fourth contact interfaces electrically interconnected and sealingly enclosed between the power assembly housing and the second monocular housing.

3. The modular night vision assembly according to claim 2 wherein the power assembly (210) provides manual variable gain to the first and second monoculars using a single control

4. The modular night vision assembly according to claim 3 wherein the single control also controls flow of power from the power source to the first and second monoculars.

5. The modular night vision assembly according to claim 2 or 3 wherein the modular assembly is configured as a binocular.

6. The modular night vision assembly according to claim 2 or 3 wherein the modular assembly is configured as an aviation binocular.

7. The modular night vision assembly according to claim 2 wherein the power assembly housing (212) includes a mounting bracket for attachment to a helmet.

8. The modular night vision assembly according to claim 2 wherein the connection assembly includes a connection platform extending from each monocular housing and a pair of engagement mechanisms within the power assembly housing.

9. The modular night vision assembly according to claim 8 wherein each engagement mechanism is configured to provide a snap-fit with a respective connection platform.

10. The modular night vision assembly according to claim 9 wherein each engagement mechanism includes at least one spring clip.

11. The modular night vision assembly according to claim 8 wherein each engagement mechanism includes a threadably adjustable wedge.

12. The modular night vision assembly according to claim 2 wherein the power assembly is configured to permit adjustment of the lateral distance between the second and fourth contact interfaces.

13. The modular night vision assembly according to claim 1 wherein the modular assembly is configured as a standalone monocular.

14. The modular night vision assembly according to claim 1 wherein the modular assembly is configured as a pocket scope.

15. The modular night vision assembly according to claim 1 wherein the modular assembly is configured as a survival vest scope.

16. The modular night vision assembly according to claim 1 wherein the modular assembly is configured as a weapon site.

17. The modular night vision assembly according to claim 1 wherein the monocular housing includes a tube body with an objective lens knob sealingly supported at a first end and a focus knob sealingly supported at the opposite end.

18. The modular night vision assembly according to claim 16 wherein the objective lens knob supports an objective lens assembly and the focus knob supports user output optics and wherein the objective lens assembly and the user output optics are axially adjustable.

19. The modular night vision assembly according to claim 1 wherein the connection assembly includes a connection platform extending from the first monocular housing and an engagement mechanism within the power assembly housing.

20. The modular night vision assembly according to claim 19 wherein the connection platform and the engagement mechanism are configured to provide a snap-fit therebetween.

21. The modular night vision assembly according to claim 20 wherein the engagement mechanism includes at least one spring clip.

22. The modular night vision assembly according to claim 19 wherein the engagement mechanism includes a threadably adustable wedge.
